# EUROPEAN PATENT SPECIFICATION

(11) **EP 3 332 242 B1**
(45) Date of publication and mention of the grant of the patent: **22.04.2026**
(21) Application number: 16833647.7
(22) Date of filing: 29.07.2016
(51) Int. Cl.: G01N 21/78, G07D 7/12, G01N 21/64, G07D 7/1205

(54) **PHOTOLUMINESCENT AUTHENTICATION DEVICES, SYSTEMS, AND METHODS**
VORRICHTUNGEN, SYSTEME UND VERFAHREN ZUR PHOTOLUMINESZENTEN AUTHENTIFIZIERUNG
DISPOSITIFS, SYSTÈMES, ET PROCÉDÉS D'AUTHENTIFICATION PAR PHOTOLUMINESCENCE

(30) Priority: 04.08.2015 US 201514817427
(43) Date of publication of application: 13.06.2018
(73) Proprietor: Spectra Systems Corporation, Providence, RI 02903 (US)
(72) Inventor: LAWANDY, Nabil, Saunderstown, RI 02874 (US)
(74) Representative: WBH Wachenhausen Patentanwälte PartG mbB
(86) International application number: PCT/US2016/044863
(87) International publication number: WO 2017/023806

(56) References cited:
- WO-A1-2008/113963
- WO-A1-2014/207415
- US-A1- 2011 199 222
- US-A1- 2011 199 222
- US-A1- 2012 132 830
- US-A1- 2014 001 351
- US-A1- 2014 061 486
- US-A1- 2014 061 486
- US-A1- 2014 233 842

## Description

### FIELD

The present application generally relates to devices, apparatus, systems and methods for authenticating items. Specifically, the present application relates to a photoluminescent label for authenticating items.

### BACKGROUND

Counterfeiting is a growing business and economic concern. Various products and items are subject to counterfeiting. For example, tax stamps for products such as liquor and tobacco, apparel, footwear, ink cartridges, currency, automotive parts, and electronics can all be subject to counterfeiting. Counterfeit products are often difficult to detect and are typically of inferior quality. Counterfeit products have an adverse impact on both consumers and manufacturers, and could even be harmful and/or dangerous to unsuspecting consumers.

Manufacturers attempt to discourage and prevent counterfeiting through various techniques. For example, some manufacturers of products targeted by counterfeiters have utilized specific markings, holograms, stamps, or other features on their products. Nevertheless, these techniques can typically be circumvented by counterfeiters. Another anti-counterfeiting technique that has been the use of radio frequency identification (RFID) tags; however, RFID tags can be expensive, and the technology needed to identify the data transmitted by each RFID tag is not readily available to consumers.
US 2011 /0199222 (LAWANDY) describes a device for authentication of a security article, wherein the article has a security feature including a material configured to absorb an incident radiation from a radiation source and to emit an emitted radiation having a spectral signature; and a sensor configured to measure a spectral signature in the emitted radiation In this case the device requires a gas environment configured to absorb an incident radiation from a radiation source and to emit an emitted radiation having a spectral signature by activation of phosphorescent or fluorescent materials by the simultaneous presence of a source of electromagnetic radiation and a specific gas environment.
WO 2008/113963 A1 discloses authentication of a security label using a mobile device. The luminescence response of the security label is measured at at least two wavelengths and the resulting spectral information is used for authentication.

Accordingly, there is a need for cost-effective and accurate authentication of products that is accessible and easy to use by consumers, while being difficult for counterfeiters to circumvent.

### BRIEF SUMMARY

The present invention is defined by the appended claims.

The present invention provides a system for authentication according to claim 1, including a photoluminescent label including a photoluminescent material having a decay time, the photoluminescent material is configured to absorb an incident radiation from a radiation source and to emit an emitted radiation having a spectral signature after removal of the radiation source, and a sensor is configured to measure the spectral signature in the emitted radiation during the decay time after removal of the source.

This embodiment of the present invention includes the following features. The measured spectral signature includes a measured spectral intensity at a first wavelength and a measured spectral intensity at a second wavelength to define a measured code. According to an embodiment of the invention, the measured spectral signature includes a measured spectral intensity at a third wavelength. These wavelengths may be in the spectrum of visible light or non-visible light. The sensor is configured to perform the measurement during the decay time of the photoluminescent material. This decay time may be at least one second, and the spectral signature may include a spectral and spatial pattern. Further, the measured code may be compared to a predetermined code to determine authentication. The sensor is a smartphone or a tablet, and the sensor may be an imaging device. Further, the photoluminescent label may be configured to be incorporated into a currency.

In general, in another aspect, exemplary disclosed examples may provide a photoluminescent label including a photoluminescent material configured to absorb an incident radiation and emit an emitted radiation having a spectral signature, the photoluminescent material having a decay time and being configured to be detected during the decay time of the photoluminescent material so that the spectral signature can be measured.

Implementations of various exemplary examples may include one or more of the following features. The spectral signature may include a spectral intensity at a first wavelength and a spectral intensity at a second wavelength to define a code, and the spectral signature may include a spectral and spatial pattern. Further, the photoluminescent material may be disposed on a fabric, and the label may include a plurality of threads, where at least two of the plurality of threads have differing types of photoluminescent material disposed thereon. Further, plurality of threads may be selected, patterned, and combined to obtain the spectral signature. Additionally, the decay time may be at least one second, and the measuring can include scanning and/or imaging.

Another embodiment of the invention provides a method according to claim 7 for authenticating an item including irradiating, with a radiation source, a label including a photoluminescent material having a decay time and being configured to absorb an incident radiation and to emit an emitted radiation having a spectral signature after removal of the radiation source, measuring, with a sensor, the spectral signature in the emitted radiation during the decay time, generating, with a computing device, a code based on the spectral signature, and comparing, with the computing device, the code to a predetermined reference code.

This embodiment of the present invention includes the following features. The label is configured such that the spectral signature includes a spectral intensity at a first wavelength, a spectral intensity at a second wavelength, and a spectral intensity at a third wavelength. Further, the sensor may be a smartphone or a tablet.

### BRIEF DESCRIPTION OF THE DRAWINGS

Figure 1A is an illustration of an exemplary photoluminescent label according to certain exemplary embodiments of the present invention;
Figure 1B is an illustration of an exemplary photoluminescent label according to certain exemplary embodiments of the present invention;
Figure 1C is a diagram of an exemplary photoluminescent label according to certain exemplary embodiments of the present invention;
Figure 2A is an illustration of an exemplary photoluminescent label according to certain exemplary embodiments of the present invention;
Figure 2B is an illustration of an exemplary photoluminescent label according to certain exemplary embodiments of the present invention;
Figure 2C is a diagram of an exemplary photoluminescent label according to certain exemplary embodiments of the present invention;
Figure 2D is an illustration of an exemplary spatial pattern of an exemplary photoluminescent label according to certain exemplary embodiments of the present invention
Figure 3 is a diagram of an exemplary photoluminescent authentication system according to certain exemplary embodiments of the present invention;
Figure 4A is a graph showing certain representative spectral characteristics of an exemplary radiation source according to certain exemplary embodiments of the present invention;
Figure 4B is a graph showing certain representative spectral characteristics of exemplary emitted radiation according to certain exemplary embodiments of the present invention;
Figure 4C is a graph showing certain representative spectral characteristics of exemplary emitted radiation according to certain exemplary embodiments of the present invention
Figure 5 is a flow diagram of an exemplary method according to certain exemplary embodiments of the present invention;
Figure 6 is a diagram of an exemplary photoluminescent authentication system according to certain exemplary embodiments of the present invention; and
Figure 7 is an illustration of an exemplary screenshot of an exemplary photoluminescent authentication application according to certain exemplary embodiments of the present invention.

### DETAILED DESCRIPTION

Exemplary embodiments of the present invention are generally directed to devices, apparatus, systems, and methods for authentication using photoluminescence. Specifically, examples of the disclosure provide a label including a photoluminescent material and associated detecting/sensing mechanisms that may be used to authenticate an item to which the label is affixed. Although the exemplary embodiments of the present invention are primarily described with respect to authentication and/or preventing counterfeiting, it is not limited thereto, and it should be noted that the exemplary photoluminescent label may be used to encode other types of information for other applications. Further, the exemplary embodiments of the present invention may be used in conjunction with other authentication measures, e.g., holograms, watermarks, and magnetic encoding.

An exemplary embodiment of the present invention provides a label including a photoluminescent material and a sensor or scanner to image and/or read a code encoded on the label. According to an embodiment of the present invention, the photoluminescent label includes a photoluminescent material. The photoluminescent material is configured to absorb an incident radiation, and emit an emitted radiation having a spectral signature after removal of the source of the incident radiation. According to the present invention, the spectral signature includes spectral intensities at certain wavelengths, and the photoluminescent material is selected and configured such that the emitted radiation has known intensities at specific wavelengths. For example, the photoluminescent material may be excited by irradiating the photoluminescent material with an incident radiation such as, e.g., visible light, which is absorbed by the photoluminescent material, and the photoluminescent material may then emit radiation having a spectral signature, such as, each of red ("R"), green ("G"), and blue ("B") light at known spectral intensities. Alternatively, the photoluminescent material may be applied in a specific spatial pattern, and the spectral signature may include spectral intensities emitted by the patterned photoluminescent material. The spectral signature, which includes spectral intensities at the particular wavelengths or may include a patterned spectral signature, can effectively be used as a code. This code, for example, may be used to authenticate the item to which the label is attached. This code can be created with any number of selected spectral intensities, and thus, more complex and intricate codes can be created by using a greater number of selected spectral intensities at particular wavelengths. Thus, the photoluminescent material may be specifically selected for the incident radiation and the desired spectral intensities in the emitted radiation. According to exemplary embodiments of the present invention, the desired spectral intensities may include the particular wavelengths and the relative and absolute amplitudes of the spectral intensities at the particular wavelengths.

Preferably, the photoluminescent material has a long decay time during which emitted radiation is emitted, e.g., greater than 1 second, such as a phosphorescent material. According to certain exemplary embodiments of the present invention, the photoluminescent material may have a decay time of any length, such as a tenth of a second, a quarter of a second, half a second, one second, or multiple seconds, e.g., 2, 3, 4, 5, or more seconds. The long decay time would enable a user sufficient time to scan or image the photoluminescent label during the decay time so that the user can obtain a measurement of the spectral intensities at particular wavelengths of the emitted radiation. Further, the photoluminescent material may be applied to virtually any surface or material, thus allowing the use of the exemplary photoluminescent label for a wide range of applications. Accordingly, the exemplary photoluminescent label is not limited to flat and/or smooth surfaces and can be used on flexible materials such as fabrics, paper, and other substrates, and may be incorporated onto the item itself. According to certain exemplary embodiments, the coating can be disposed under the surface of the label and may be excited and scanned and/or imaged through the surface of the label.

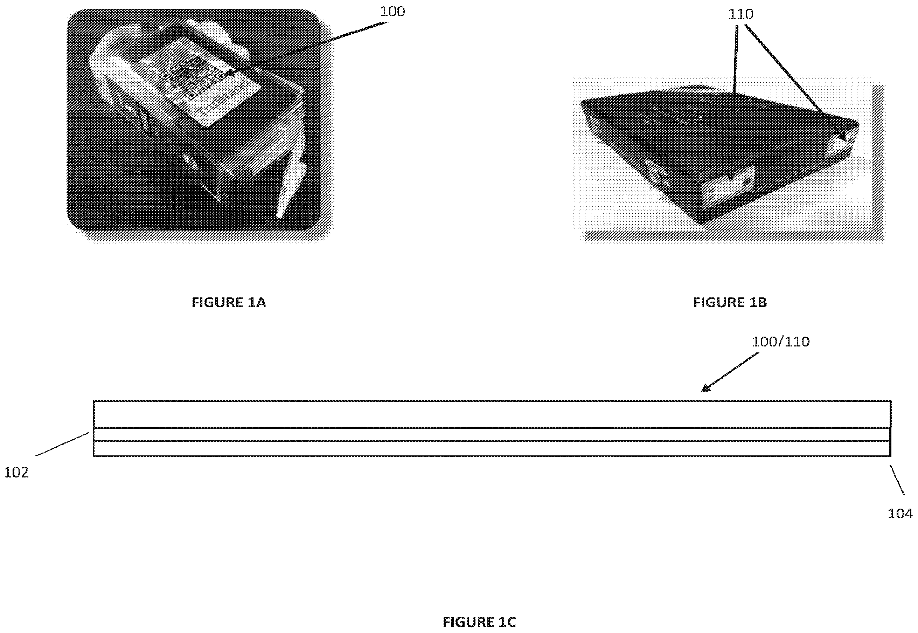

In accordance with exemplary embodiments of the present invention, Figures 1A and 1B show exemplary photoluminescent labels 100 and 110 attached to consumer products. Although label 100 is a holographic label attached to a printer ink cartridge, label 100 can be attached to any product or product packaging and can be part of other types of labels, such as, e.g., barcode labels and QR-codes. Figure 1B shows photoluminescent label 110 as a tax stamp affixed to a tobacco product. As with photoluminescent label 100, photoluminescent label 110 can be incorporated onto other labels, such as stamps, on virtually any product. Figure 1C shows a magnified, generalized cross-sectional view of photoluminescent labels 100 and 110. As shown in Figure 1C, the photoluminescent material 102 may be applied to the back of the label 100.

According to certain exemplary embodiments of the present invention, photoluminescent material 102 may include storage phosphors and long decay phosphors containing rare earths metals and transition metals, and various hosts including glasses such as phosphates and aluminosilicates. Further, this photoluminescent material may be added as a coating to any label during the manufacturing process of the label, and in particular, may be included in a binder material attached to the bottom of the label. Preferably, an adhesive, or other affixing element 104 may be applied over the photoluminescent material so that the label can be affixed to a product or a package. Alternatively, photoluminescent material 102 may be applied to the front or top of the label, and a protective coating may be applied over the photoluminescent material 102. According to yet another embodiment of the present invention, photoluminescent material 102 may be directly applied to an item, such as currency, which may require the item itself, rather than the packaging, to be authenticated.

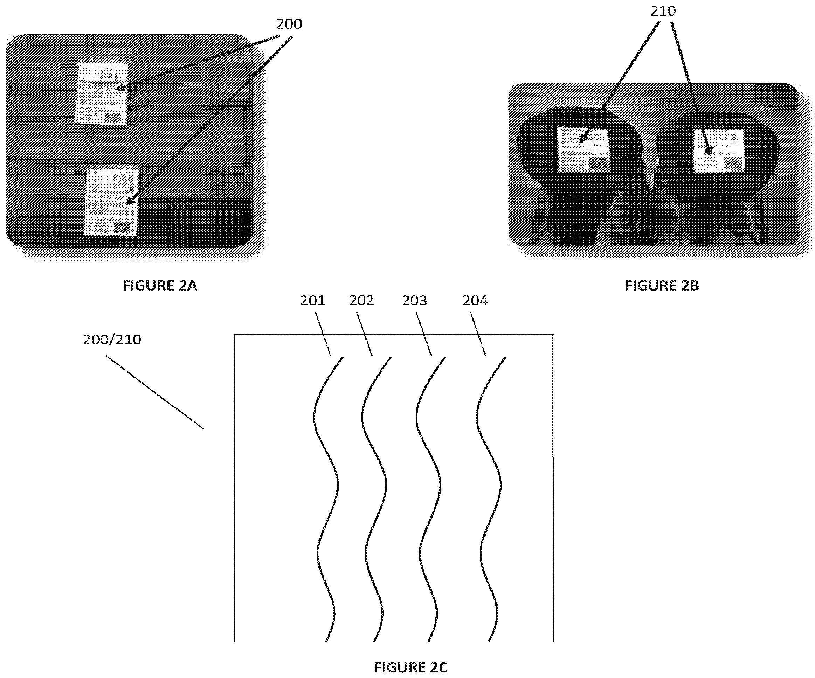

Figures 2A and 2B show further exemplary photoluminescent labels 200 and 210 according to certain exemplary embodiments of the present invention. As shown in Figures 2A and 2B, photoluminescent labels 200 and 210 are fabric labels that may be attached to certain apparel, such as the photoluminescent label 200 as shown in Figure 2A, or footwear, such as the photoluminescent label 210 as shown in Figure 2B.

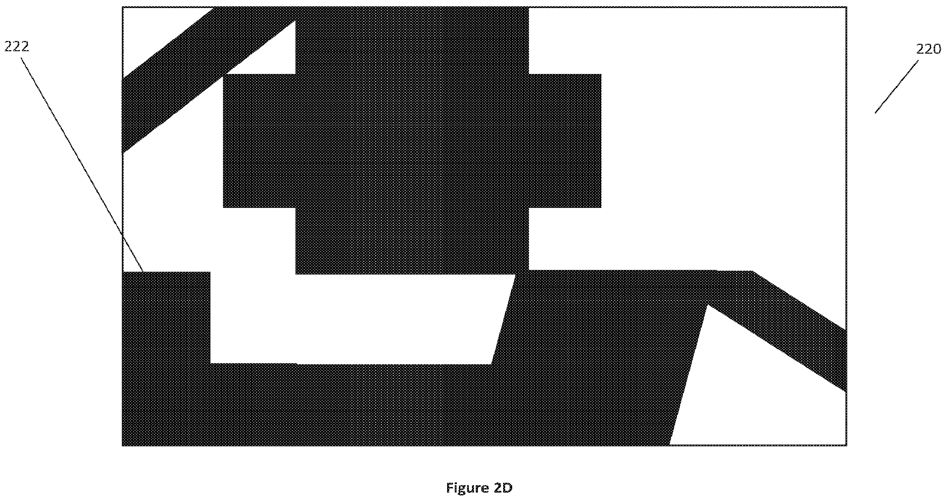

Similar to photoluminescent labels 100 and 110, photoluminescent labels 200 and 210 may include a photoluminescent material which may be applied as a coating having a printed or spatial pattern onto the fabrics that make up photoluminescent labels 200 and 210. Alternatively, as shown in Figure 2C, photoluminescent labels 200 and 210 may be constructed from individual threads bearing photoluminescent material. For example, according to an exemplary embodiment of the present invention, at least one of threads 201, 202, 203, and 204 may contain a photoluminescent material, and threads 201-204 can be woven together to create photoluminescent labels 200 and 210. According to certain exemplary embodiments, threads 201, 202, 203, and 204 may all contain the same photoluminescent material. Alternatively, each of threads 201, 202, 203, and 204 may contain a different photoluminescent material, each of which may have differing absorption and emission characteristics. Further, the denier of the threads, e.g., 20-80, may be varied to vary the amount of photoluminescent material that is contained on each thread. Accordingly, the denier of the threads and the types of photoluminescent material applied to each of the threads may be specifically selected and/or patterned to obtain a spectral and spatial signature, such as specific emission characteristics to yield certain spectral intensities or a spectral and spatial pattern, to create unique codes. For example, threads 201 and 203 may have a certain denier and contain a first type of photoluminescent material, and threads 202 and 204 may have a different denier and contain a second type of photoluminescent material. Alternatively, threads 201-204 may each contain a different type of photoluminescent material. In some embodiments, some of threads 201-204 may not contain any photoluminescent material. Accordingly, any combination or permutation of different deniers and photoluminescent materials may be utilized and patterned to specifically obtain a spectral and spatial signature, such as desired emission characteristics and spectral intensities or a desired spectral and spatial pattern, in the radiation emitted by the photoluminescent labels 200 and 210 in creating unique codes. Figure 2D shows an exemplary label 220, with the shaded portions representing an exemplary spectral and spatial pattern 222 which may be emitted by photoluminescent labels 200 and 210.

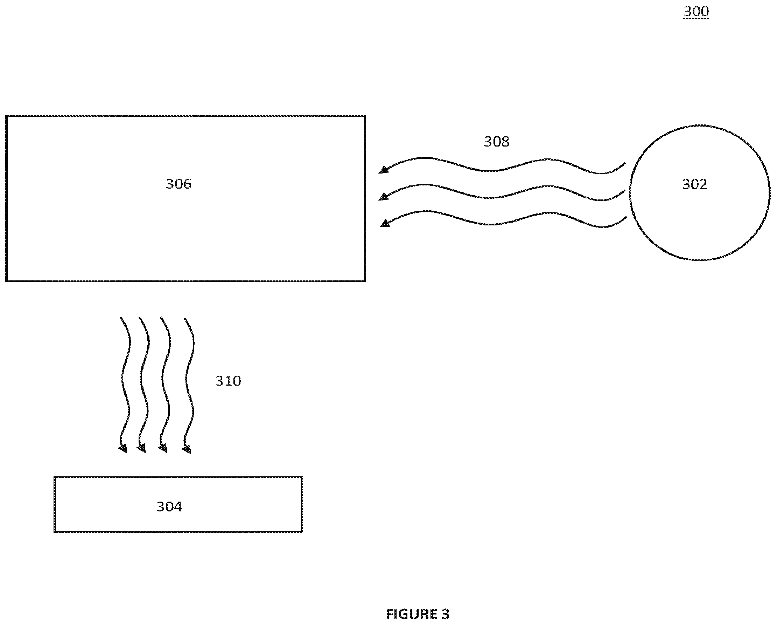

Figure 3 shows an exemplary system 300 in accordance with exemplary embodiments of the present invention. As shown in Figure 3, system 300 may include a radiation/excitation source 302, a sensor 304, and a photoluminescent label 306. Radiation/excitation source 302 may be any source supplying radiation 308, such as, e.g., visible light, ultraviolet, radio, or microwave, which is to be absorbed by photoluminescent label 306. The photoluminescent label 306 may re-emit emitted radiation 310 at the same wavelengths or emit emitted radiation 310 at different wavelengths. Sensor 304 may include any detecting, sensing, imaging, or scanning device that is able to receive, image, and/or measure the spectrum of the radiation emitted by the photoluminescent label 304, such as a photometer or digital camera. According to certain exemplary embodiments of the present invention, radiation/excitation source 302 may include the flash of a digital camera, and sensor 304 may include the optical components and sensors of the digital camera. According to the invention, the radiation/excitation source 302 may include the light source of a smartphone or tablet camera, e.g., Apple iPhone, Apple iPad, Samsung Galaxy or other Android devices, and sensor 304 may include the camera of the smartphone or tablet. According to the invention, the light source and the lens of a smartphone or tablet camera is moved across a surface of the photoluminescent label 306 to sequentially excite photoluminescent label 306 by irradiating photoluminescent label 306 with the light source of the smartphone or tablet and, after the excitation has been removed, measure the spectrum of the emitted radiation with the smartphone or tablet camera in a single motion. Further, photoluminescent label 306 may include any of photoluminescent labels 100, 110, 200, or 210 described herein, and may be attached or affixed to any product or item, e.g., tax stamps, apparel, currency, or footwear, for which authentication may be desirable.

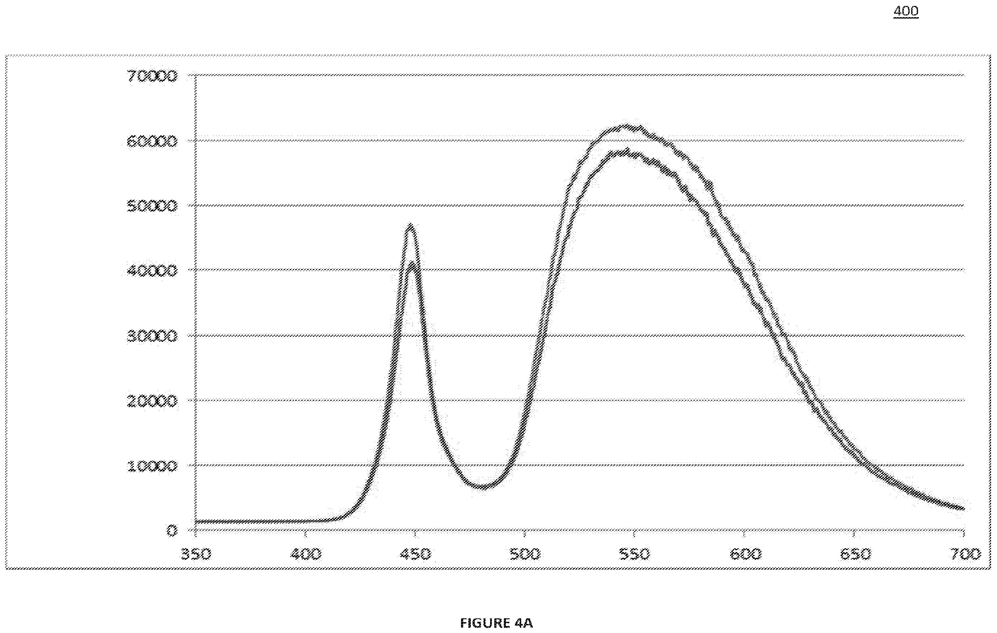

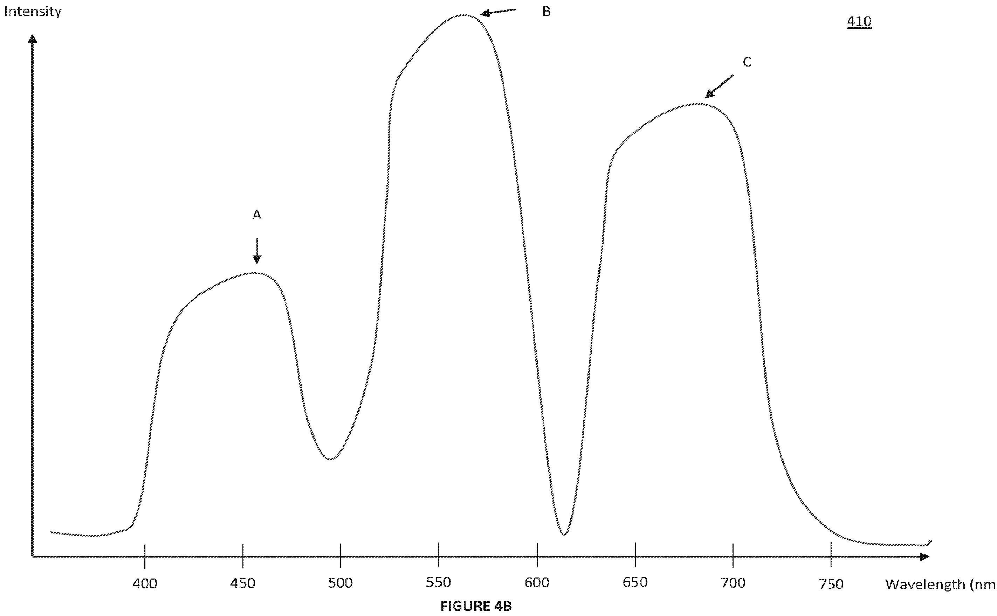

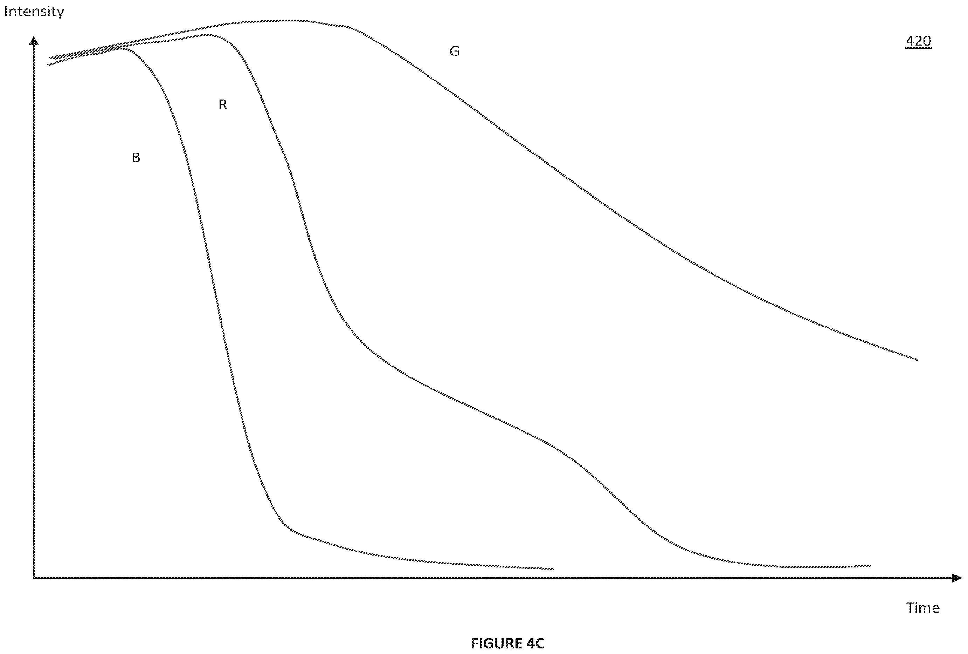

Figures 4A, 4B, and 4C are exemplary graphs representing certain representative characteristics of the incident and emitted radiations according to exemplary embodiments of the present invention. The depictions in graphs 400, 410, and 420 are merely representative, and exemplary embodiments of the present invention may employ any variation of decay times, as well as spectral intensity characteristics, such as the number of spectral intensities used, the wavelengths at which the spectral intensities are measured, and the amplitude of the spectral intensities. Figure 4A shows an exemplary graph 400 of representative spectral intensities of an exemplary incident radiation/excitation source. For example, graph 400 shows the spectral intensities of a smartphone camera light source used in two different modes. As shown in graph 400, the exemplary incident radiation includes higher spectral intensities near the 450 nm and the 550 nm wavelengths, which generally correspond to blue and green light, respectively. It should be noted that the spectral intensities of various light sources may vary widely, and the spectral intensities of the incident radiation absorbed by the photoluminescent label may affect the spectral characteristics of the radiation emitted by the photoluminescent label.

Figure 4B shows an exemplary graph 410 of representative spectral intensities of emitted radiation that may be used to compose an exemplary code in accordance with exemplary embodiments of the present invention, and Figure 4C shows an exemplary graph 420 of representative relative decay times of certain wavelengths of the emitted radiation. As shown in Figure 4B, exemplary graph 410 depicts representative relative spectral intensities of an exemplary spectrum of radiation. According to certain exemplary embodiments of the present invention, the spectral intensities at points A, B, and C, or any other point in the spectrum, may be used to create a unique code encoded on a photoluminescent label. According to certain exemplary embodiments of the present invention, wavelengths in the visible light spectrum or the non-visible light spectrum may be used.

Figure 4C shows an exemplary graph 420 of representative relative decay times of certain wavelengths of the emitted radiation. As shown in graph 420, each of the wavelengths of radiation in the emitted radiation may decay at a different rate. In view of the variable decay times of certain wavelengths, it may be advantageous to select specific wavelengths based on their respective decay times. For example, wavelengths that have decay times that would allow sufficient time for a user to scan and/or image the radiation emitted by the photoluminescent label are preferable to those that decay quickly and would not provide a user sufficient time to scan and/or image the photoluminescent label.

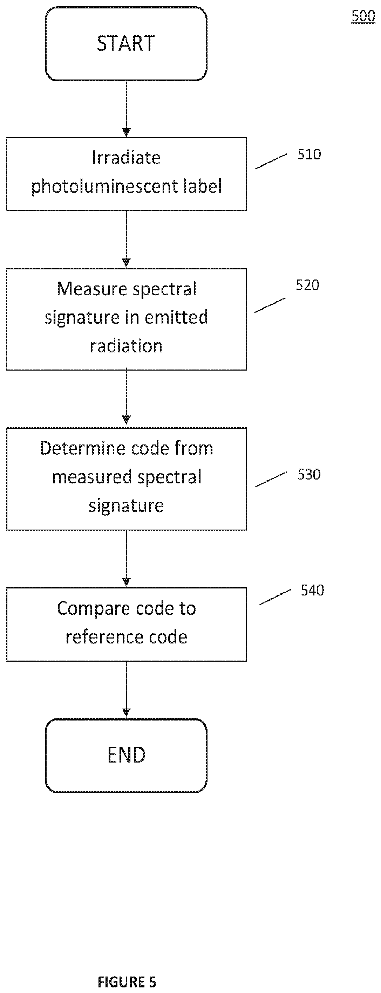

Figure 5 shows an exemplary flow diagram 500 illustrating an exemplary operation of a photoluminescent system, such as system 300 shown in Figure 3, for authenticating an item. As described in step 510, a radiation/excitation source 302 may irradiate photoluminescent label 306. After the photoluminescent label 306 has absorbed the radiation, the photoluminescent material emits emitted radiation. Accordingly, as shown in step 520, sensor 304 is used to measure the spectral signature in the emitted radiation. As described herein, the spectral signature, which may include a patterned spectrum or a spatial pattern or certain spectral intensities, defines the code encoded in photoluminescent label 306. In step 530, the code is determined from the measured spectral signature. In step 540, the code, which was determined from the measured spectral signature, is compared against reference codes stored in a database. This comparison provides authentication of the item to which photoluminescent label 306 is attached depending on whether or not the deciphered code and the stored reference codes match. Optionally, the process can be repeated to authenticate a subsequent item if the item is found not to be authentic.

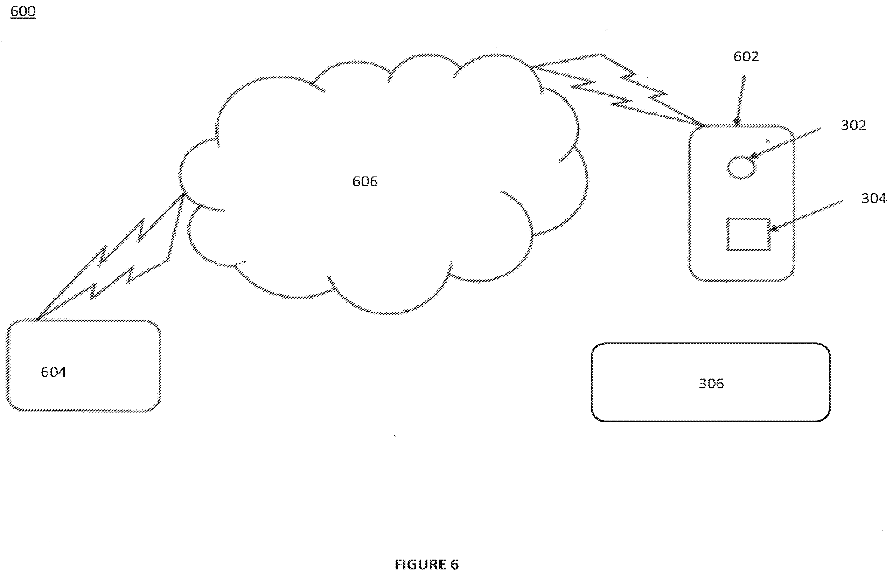

Figure 6 shows an exemplary system 600 that may be employed to authenticate an item using the photoluminescent labels described herein. For example, system 600 includes a computing device 602, which may include radiation/excitation source 302 and sensor 304. Computing device 602 may be any computing device that could incorporate a radiation/excitation source 302 and sensor 304, such as a smartphone, a tablet, or a personal data assistant (PDA). Alternatively, radiation/excitation source 302 and sensor 304 may be stand-alone devices that operate independent of a computing device. As described herein, the radiation/excitation source 302 may irradiate an exemplary photoluminescent label, and sensor 304 may measure the radiation emitted by the photoluminescent label, including the spectral signature. The computing device 602 may then determine the code from the measured spectral signature of the radiation emitted by the photoluminescent label. Alternatively, this processing may be performed by a remote computing device. Subsequently, the code or the measured spectral signature may be compared to a database of reference codes or spectral signatures. The database of reference codes may be stored locally on the scanning, imaging, or sensing device or remotely on a separate computing device. As shown in Figure 6, to complete the authentication, the computing device 602 may compare the code or the measured spectral intensities to the reference codes or spectral signature stored in a database 604. Although Figure 6 illustrates this comparison being performed via a network 606 to a remote database 604, other embodiments contemplate database 604 being local to computing device 602.

Further, in some embodiments, the item being authenticated may include an identifying label, such as, e.g., a barcode, a QR code, or a magnetic code, to enable correlation of the code or the measured spectral intensities to the item being authenticated. In a particular embodiment where computing device 602 is a smartphone or tablet, the transmission via the network 606 may be done over a cellular data connection or a Wi-Fi connection. Alternatively, this can be performed with a wired connection or any other data transport mechanisms.

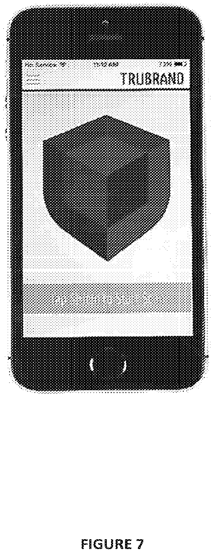

In certain embodiments of the present invention where a computing device, such as a smartphone or tablet, is utilized for authenticating an item, a software application may be used to simplify the authentication process. Figure 7shows an exemplary screen shot of a software application that may be utilized on a smartphone for authenticating an item. The exemplary application may be configured to be executed on any mobile platform, such as Apple's iOS or Google's Android mobile operating system. When the application is run, the software application may provide instructions to a user on properly irradiating/exciting and scanning or imaging the photoluminescent label. Once irradiating and scanning of the photoluminescent label is complete, the application may facilitate comparison of the measured spectral signature and/or the measured code with a reference database storing certain reference codes or spectral signatures to authenticate the item. Further, the application may provide a message or other indicator informing the user of the result of the authentication. For example, the application may provide a text, graphical, or other visual indicator on the screen of the smartphone showing the results of the authentication. Alternatively, the application may provide audible and/or tactile indicators conveying the results of the authentication.

According to certain exemplary embodiments of the present invention, the exemplary photoluminescent label may also have a tamper resistant feature. For example, the photoluminescent label may be configured such that after the photoluminescent material is adhered to a surface, an individual may be prevented from detaching the photoluminescent material and/or the photoluminescent label in a manner that maintains the integrity of the photoluminescent material and/or the photoluminescent label. For example, any of photoluminescent labels 100, 110, 200, or 210 may be configured such that the label may not be removed intact such that if an individual were to tamper with the label, it would render the photoluminescent label inoperable or create a clear visual indication that the photoluminescent label had been tampered with.

The embodiments and examples above are illustrative, and many variations can be introduced. The invention is defined by the scope of the appended claims. For example, elements and/or features of different illustrative and exemplary embodiments herein may be combined with each other and/or substituted with each other within the scope of this disclosure. For a better understanding of the invention, its operating advantages and the specific objects attained by its uses, reference should be had to the accompanying drawings and descriptive matter in which there are illustrated exemplary embodiments of the invention.

## Claims

1. A system for authentication, the system comprising:
a radiation source (302);
a security feature including a material (102) configured to absorb an incident radiation from the radiation source (302) and to emit an emitted radiation having a spectral signature; and
a sensor (304) configured to measure a spectral signature in the emitted radiation;
wherein the security features is a photoluminescent label (306) including the photoluminescent material (102) which has a decay time, the photoluminescent material being configured to emit the emitted radiation having the spectral signature at a first wavelength and a second wavelength after removal of the radiation source;
the sensor (304) is configured to measure spectral intensities at the first wavelength and the second wavelength of the spectral signature in the emitted radiation at a first time during the decay time after removal of the radiation source (302);
**characterised in that** the radiation source (302) and the sensor (304) being included in a smartphone or a tablet; and the radiation source (302) configured to provide the incident radiation and the sensor (304) configured to measure the emitted radiation in a single motion of the smartphone or the tablet across a surface of the photoluminescent label (306).

2. The system of claim 1, wherein the measured spectral signature defines a measured code.

3. The system of claim 2, wherein the measured code is compared to a predetermined code to determine authentication.

4. The system of claim 1, wherein the spectral signature includes a spectral and spatial pattern.

5. The system of claim 2, wherein the measured spectral signature includes a measured spectral intensity at a third wavelength.

6. The system of claim 1, wherein the photoluminescent label is configured to be incorporated into a currency.

7. A method for authenticating an item, comprising:
irradiating, with a radiation source, a label including a photoluminescent material having a decay time and configured to absorb an incident radiation and to emit an emitted radiation having a spectral signature that includes a spectral intensity at a first wavelength, a spectral intensity at a second wavelength, and a spectral intensity at a third wavelength after removal of the radiation source;
measuring, with a sensor, the spectral signature in the emitted radiation during the decay time after removal of the radiation source;
generating, with a computing device, a code based on the spectral signature; and
comparing, with the computing device, the code to a predetermined reference code;
**characterised in that** the radiation source and the sensor are included in a smartphone or a tablet; and
wherein the radiation source irradiates the incident radiation and the sensor measures the emitted radiation in a single motion of the smartphone or the tablet across a surface of the label.

## Patentansprüche

1. System zur Authentifizierung, umfassend:
eine Strahlungsquelle (302);
ein Sicherheitsmerkmal mit einem Material (102), das eingerichtet ist, eine einfallende Strahlung von der Strahlungsquelle (302) zu absorbieren und eine emittierte Strahlung mit einer spektralen Signatur zu emittieren; und
einen Sensor (304), der eingerichtet ist, eine spektrale Signatur in der emittierten Strahlung zu messen;
wobei
das Sicherheitsmerkmal ein photolumineszentes Label (306) mit dem photolumineszenten Material (102) ist, das eine Abklingzeit aufweist, wobei das photolumineszente Material eingerichtet ist, nach Entfernen der Strahlungsquelle die emitterte Strahlung mit der spektralen Signatur bei einer ersten Wellenlänge und einer zweiten Wellenlänge zu emittieren;
der Sensor (304) eingerichtet ist, spektrale Intensitäten bei der ersten Wellenlänge und der zweiten Wellenlänge der spektralen Signatur in der emittierten Strahlung zu messen, zu einem ersten Zeitpunkt während der Abklingzeit nach Entfernen der Strahlungsquelle (302);
**dadurch gekennzeichnet, dass**
die Strahlungsquelle (302) und der Sensor (304) in einem Smartphone oder einem Tablet enthalten sind; und die Strahlungsquelle (302) eingerichtet ist, die einfallende Strahlung bereitzustellen, und der Sensor (304) eingerichtet ist, die emittierte Strahlung in einer einzigen Bewegung des Smartphones oder des Tablets über eine Oberfläche des photolumineszenten Labels (306) zu messen.

2. System nach Anspruch 1, wobei die gemessene spektrale Signatur einen gemessenen Code definiert.

3. System nach Anspruch 2, wobei der gemessene Code mit einem vorbestimmten Code zum Bestimmen einer Authentifizierung vergleichbar ist.

4. System nach Anspruch 1, wobei die spektrale Signatur ein spektrales und räumliches Muster umfasst.

5. System nach Anspruch 2, wobei die gemessene spektrale Signatur eine gemessene spektrale Intensität bei einer dritten Wellenlänge umfasst.

6. System nach Anspruch 1, wobei das photolumineszente Label eingerichtet ist, um in ein Zahlungsmittel integrierbar zu sein.

7. Verfahren zum Authentifizieren eines Gegenstands, umfassend:
Beleuchten, mit einer Strahlungsquelle, eines Labels, wobei das Label ein photolumineszentes Material mit einer Abklingzeit umfasst und eingerichtet ist, eine einfallende Strahlung zu absorbieren und eine emittierte Strahlung mit einer spektralen Signatur zu emittieren, die nach Entfernen der Strahlungsquelle eine spektrale Intensität bei einer ersten Wellenlänge, eine spektrale Intensität bei einer zweiten Wellenlänge und eine spektrale Intensität bei einer dritten Wellenlänge umfasst;
Messen, mit einem Sensor, der spektralen Signatur in der emittierten Strahlung während der Abklingzeit nach Entfernen der Strahlungsquelle;
Erzeugen, mit einer Recheneinrichtung, eines Codes basierend auf der spektralen Signatur; und
Vergleichen, mit der Recheneinrichtung, des Codes mit einem vorbestimmten Referenzcode;
**dadurch gekennzeichnet, dass**
die Strahlungsquelle und der Sensor in einem Smartphone oder einem Tablet enthalten sind; und wobei die Strahlungsquelle die einfallende Strahlung emittiert und der Sensor die emittierte Strahlung in einer einzigen Bewegung des Smartphones oder des Tablets über eine Oberfläche des Labels misst.

## Revendications

1. Système d'authentification, le système comprenant :
une source de rayonnement (302) ;
une caractéristique de sécurité comprenant un matériau (102) configuré pour absorber un rayonnement incident provenant de la source de rayonnement (302) et pour émettre un rayonnement émis ayant une signature spectrale ; et
un capteur (304) configuré pour mesurer une signature spectrale dans le rayonnement émis ;
la caractéristique de sécurité étant une étiquette photoluminescente (306) comprenant le matériau photoluminescent (102) qui a un temps de décroissance, le matériau photoluminescent étant configuré pour émettre le rayonnement émis ayant la signature spectrale à une première longueur d'onde et à une deuxième longueur d'onde après retrait de la source de rayonnement ;
le capteur (304) étant configuré pour mesurer des intensités spectrales à la première longueur d'onde et à la deuxième longueur d'onde de la signature spectrale dans le rayonnement émis à un premier moment pendant le temps de décroissance après retrait de la source de rayonnement (302).
**caractérisé en ce que**
la source de rayonnement (302) et le capteur (304) sont inclus dans un smartphone ou une tablette ; et
la source de rayonnement (302) est configurée pour fournir le rayonnement incident et le capteur (304) est configuré pour mesurer le rayonnement émis en un seul mouvement du smartphone ou de la tablette sur une surface de l'étiquette photoluminescente (306).

2. Système selon la revendication 1, la signature spectrale mesurée définissant un code mesuré.

3. Système selon la revendication 2, le code mesuré étant comparé à un code prédéterminé pour déterminer l'authentification.

4. Système selon la revendication 1, la signature spectrale comprenant un motif spectral et spatial.

5. Système selon la revendication 2, la signature spectrale mesurée comprenant une intensité spectrale mesurée à une troisième longueur d'onde.

6. Système selon la revendication 1, l'étiquette photoluminescente étant configurée pour être incorporée dans une monnaie.

7. Procédé d'authentification d'un article, comprenant :
l'irradiation, au moyen d'une source de rayonnement, d'une étiquette comprenant un matériau photoluminescent ayant un temps de décroissance et configuré pour absorber un rayonnement incident et émettre un rayonnement émis ayant une signature spectrale qui comprend une intensité spectrale à une première longueur d'onde, une intensité spectrale à une deuxième longueur d'onde et une intensité spectrale à une troisième longueur d'onde après retrait de la source de rayonnement ;
la mesure, à l'aide d'un capteur, de la signature spectrale dans le rayonnement émis pendant le temps de décroissance après le retrait de la source de rayonnement ;
la génération, à l'aide d'un dispositif informatique, d'un code basé sur la signature spectrale ; et
la comparaison, à l'aide du dispositif informatique, du code à un code de référence prédéterminé ;
**caractérisé en ce que**
la source de rayonnement et le capteur sont inclus dans un smartphone ou une tablette ; et
la source de rayonnement émet le rayonnement incident et le capteur mesure le rayonnement émis en un seul mouvement du smartphone ou de la tablette sur une surface de l'étiquette.
